(19) **Europäisches Patentamt European Patent Office Office européen des brevets**

(11) **EP 1 533 628 B1**

(12) **EUROPEAN PATENT SPECIFICATION**

(45) Date of publication and mention of the grant of the patent:
**24.10.2012 Bulletin 2012/43**

(51) Int Cl.:
***G01S 13/72*** *(2006.01)*

(21) Application number: **03445132.8**

(22) Date of filing: **19.11.2003**

(54) **A method for correlating and numbering target tracks from multiple sources**

Methode zur Korrelation und Nummerierung von Zielspuren aus mehreren Quellen

Procédé pour corréler et numéroter des pistes de cibles de plusieurs sources

(84) Designated Contracting States:
**AT BE BG CH CY CZ DE DK EE ES FI FR GB GR HU IE IT LI LU MC NL PT RO SE SI SK TR**

(43) Date of publication of application:
**25.05.2005 Bulletin 2005/21**

(73) Proprietor: **SAAB AB**
**581 88 Linköping (SE)**

(72) Inventors:
• **Bergman, Niclas**
**191 33 Sollentuna (SE)**
• **Sviestins, Egils**
**191 46 Sollentuna (SE)**

(74) Representative: **Norberg, Charlotte et al**
**Albihns.Zacco**
**Valhallavägen 117**
**Box 5581**
**114 85 Stockholm (SE)**

(56) References cited:
**US-A- 5 414 643**

• **BLACKMAN, S: "Chapter 10: The Bayesian Probabilistic Approach" MULTIPLE-TARGET TRACKING WITH RADAR APPLICATIONS, 1986, pages 280-307, XP002277516 ARTECH HOUSE, Deadham, MA, USA**
• **BLACKMAN S, POPOLI R: "Chapter 9: Multiple Sensor Tracking - Issues and Methods" DESIGN AND ANALYSIS OF MODERN TRACKING SYSTEMS, 1999, pages 595-659, XP002277517 ARTECH HOUSE, Norwood, MA, USA**

• **DRUMMOND O E: "Hybrid sensor fusion algorithm architecture and tracklets" SIGNAL AND DATA PROCESSING OF SMALL TARGETS 1997, SAN DIEGO, CA, USA, 29-31 JULY 1997, vol. 3163, pages 485-502, XP009029377 Proceedings of the SPIE - The International Society for Optical Engineering, 1997, SPIE-Int. Soc. Opt. Eng, USA ISSN: 0277-786X**
• **BRUNET M ET AL: "Multisensor Multitarget Tracking for Airport Simulation" PROCEEDINGS OF THE IASTED INTERNATIONAL CONFERENCE ON APPLIED MODELLING AND SIMULATION, XX, XX, 25 June 2002 (2002-06-25), pages 1-5, XP002252729**
• **PAWLOWSKI A M ET AL: "Simulator, workstation, and data fusion components for onboard/offboard multi-target multi-sensor fusion" DIGITAL AVIONICS SYSTEMS CONFERENCE, 1998. PROCEEDINGS., 17TH DASC. THE AIAA/IEEE/SAE BELLEVUE, WA, USA 31 OCT.-7 NOV. 1998, NEW YORK, NY, USA,IEEE, US, 31 October 1998 (1998-10-31), pages C31-1-C31-8, XP010318102 ISBN: 0-7803-5086-3**
• **ASSEO S J: "Integration of active and passive track files from internetted aircraft for enhanced situation awareness" PROCEEDINGS OF THE IEEE 1988 NATIONAL AEROSPACE AND ELECTRONICS CONFERENCE: NAECON 1988 (CAT. NO.88CH2596-5), DAYTON, OH, USA, 23-27 MAY 1988, pages 242-250 vol.1, XP010076898 1988, New York, NY, USA, IEEE, USA**

- **PERCIVAL D J ET AL: "Multihypothesis fusion of multipath over-the-horizon radar tracks" SIGNAL AND DATA PROCESSING OF SMALL TARGETS 1998, ORLANDO, FL, USA, 14-16 APRIL 1998, vol. 3373, pages 440-451, XP002277518 Proceedings of the SPIE - The International Society for Optical Engineering, 1998, SPIE-Int. Soc. Opt. Eng, USA ISSN: 0277-786X**

## Description

### Technical field of the invention

The present invention relates to target tracking, in particular the correlation of tracks maintained by different trackers, into a single set of tracks, and assigning a track number to each track in the correlated set.

### Prior art

Target tracking is the process by which the location, motion, and possibly identity, of objects like aircraft, ships, and ground vehicles, are established and presented to users, for example situated at command and control centers. The detection of the targets is accomplished by one or more sensors, where the most widely used sensor for air targets is the radar. Examples of other sensors of interest are infrared sensors, ESM (Electronic Support Measures) which detect radar radiation from the target, and jam strobe detectors. Satellite navigation data may also provide location data for friendly targets. A tracker takes a sequence of measured target locations, and determines which measurements belong to true targets, creates a track for each target, assigns an arbitrary track number, and computes speed, heading, and position (with reduced noise errors) for the target. The track data are subsequently updated as more measurements enter the tracker. A tracker may use measurements from a single sensor or from multiple sensors (multisensor tracking).

As an example of a previously known tracking process in this connection it could be referred to US-A-5 414 643. According to said patent multiple hypothesis tracking data is subjected to a continuous time representation involving track-to-track correlation.

The present invention does not deal with the actual tracking process. The purpose is to combine the tracks produced by several trackers into a situation picture, and assign a global track number to the combined tracks.

The problem would be easy if each track reliably represented a target, but in reality this is not always the case. There are many reasons why trackers make mistakes - false tracks may appear because of false sensor reports; originally correct tracks may deviate from truth because of gaps in sensor coverage and/or presence of false measurements; tracks may be swapped when targets come close to each other; there may be ambiguities in sensor reports, especially with sensors that do not give the range to the target; and so forth. It is thus necessary to continually reconsider any correlation decisions made by the tracker. In practice, this is often made manually by operators.

Samuel Blackman and Robert Popoli give an overview over different track-to-track correlation techniques in "Design and Analysis of Modern Tracking Systems", Artech House, MA, USA 1999, see section 9.1 - 9.6. Note that none of the methods actually include the track number handling; track-to-track association deals with determining which tracks represent the same target, while questions on which track number should go with each of the tracks during recorrelation are left to ad hoc engineering.

The problem of correct track number assignments is extremely important, as information on the targets, such as e.g. affiliation or mission, is connected to the track number. Swapped or lost track numbers may therefore have highly undesired consequences.

Nonetheless, the problem of track number management in connection with track-to-track correlation is rarely addressed in the prior work. One example is found in the proceedings of the SPIE - The International Society for Optical Engineering, Vol 3163 (1997), in an article in the name of Oliver Drummond with the title "A Hybrid Sensor Fusion Algorithm Architecture and Tracklets", pages 485-502.

Much of the research work in the area of track-to-track correlation deals with the problem that the tracks have a certain cross-covariance (i.e. their errors are not independent), something which complicates optimal decisions on whether two tracks stand for the same target. Such handling may be of interest also in the present invention, but it is only a minor part of the problem that our invention addresses.

There is one piece of work that slightly resembles the one in this invention. It is written by D J Percival and K A B White, and found in the proceedings of SPIE Vol 3373 (1998) pages 440-451, under the title "Multihypothesis Fusion of Multipath Over-the-Horizon Radar Tracks". This paper considers a different application where the different tracks stem from different reflective layers in the ionosphere, and moreover, track numbering and renumbering is not the primary issue.

### Summary of the invention

An object of the invention is to provide a method for correlating tracks from different track sources and at the same time performing track number assignment.

Further, the object of the invention is to provide a method for correlating tracks from different track sources and assign track numbers in a way that for performance reasons is based on Bayesian hypothesis testing of a large number of hypotheses.

Yet another object of the invention is to provide a method for correlating tracks from different track sources and assign track numbers in a way that is suitable for recurrent evaluation and correction of correlations and track number assignments.

Still another object of the invention is to provide a method that can serve as the basis for distributed correlation and track number assignment, i.e. where the correlation takes place at several nodes in a network to form a common situation picture.

These objects are achieved by a process exhibiting the features set forth in the claims. The cornerstone of the invention is that the hypothesis testing encompasses the correlation between tracks and (unknown) targets, instead of the traditional track-to-track correlation. If the algorithm assigns the same target to two different tracks, it implies, as a side effect, that the two tracks are correlated.

A large number of track-to-target correlation hypotheses are generated, and probabilities are assigned to all or a subset of these hypotheses. Then the sensor track positions are compared and used for updating the probabilities of the hypotheses. The algorithm produces suggestions for recorrelation (i.e. changing the track-to-target assignments) for operator approval or for automatic execution.

## Drawings

Embodiments according to the present invention are presented in detail in the following, in connection with the associated drawings, in which:

FIG. 1 illustrates the relation between trackers and a track correlator.
FIG. 2 summarizes the main steps in the correlation/numbering algorithm.
FIG. 3 illustrates the idea of assigning target numbers to local tracks.
FIG. 4 shows an ambiguous case where track swapping has occurred.
FIG. 5 shows a concept with distributed correlation.

## Detailed description

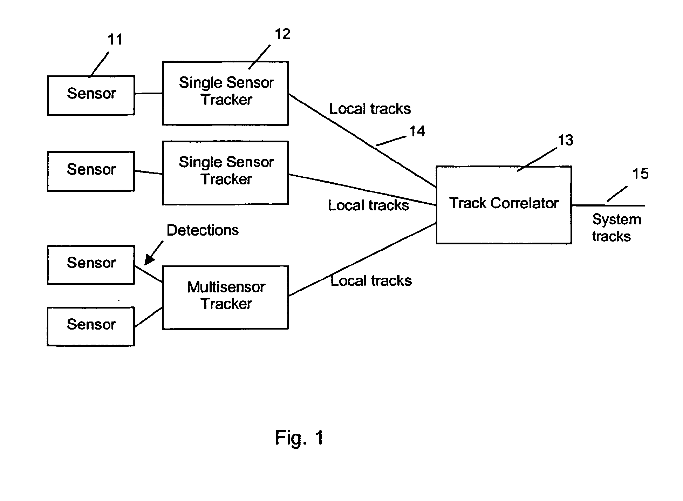

The present invention uses track data as input. With reference to Figure 1, the tracks are produced by trackers 12 which can be located remotely, often at the sensors 11, or at a different command & control center, or at the same site or even the same computer where the track correlator 13 resides. Track data usually comprise

a. A locally assigned track number (or some other identification tag)
b. A time tag
c. Target location data (often Cartesian components)
d. Target kinematic data (often speed and heading)
e. Track quality (a number, or sometimes uncertainty measures like standard deviations)
f. Sometimes additional data, for example codes supplied by a transponder on friendly targets, or target category supplied by operators or automatic means.

The tracks 14 are sent to the track correlator 13 at time intervals which depend on tracker design. The task of the correlator is to produce system tracks 15 based on the incoming local tracks, and make sure that if two local tracks 14 represent the same target, they both contribute to the same system track 15. The system track may be formed by fusing (for example averaging) the corresponding local tracks, or they may simply consist of the best of the local tracks. The present invention does not include this functionality. It produces lists of system track numbers and the corresponding local track numbers, and it is then up to the user to decide whether the local tracks should be fused or selected.

Our track correlator will work cyclically, with an update rate long enough to make observations essentially independent. To this end, the typical motion of the targets between two updates should be much larger than the measurement uncertainties.

When a new local track has been created, there is often a requirement that a system track 15 be created with shortest possible delay. Therefore one may not want to wait until the next correlation cycle, but instead make a quick check whether the new local track is already tracked by another tracker, and if not, create a new entry in the system track list. The subsequent description will assume that every local track has a previous system track number assignment, although it is not difficult to generalize the algorithm to include new local tracks.

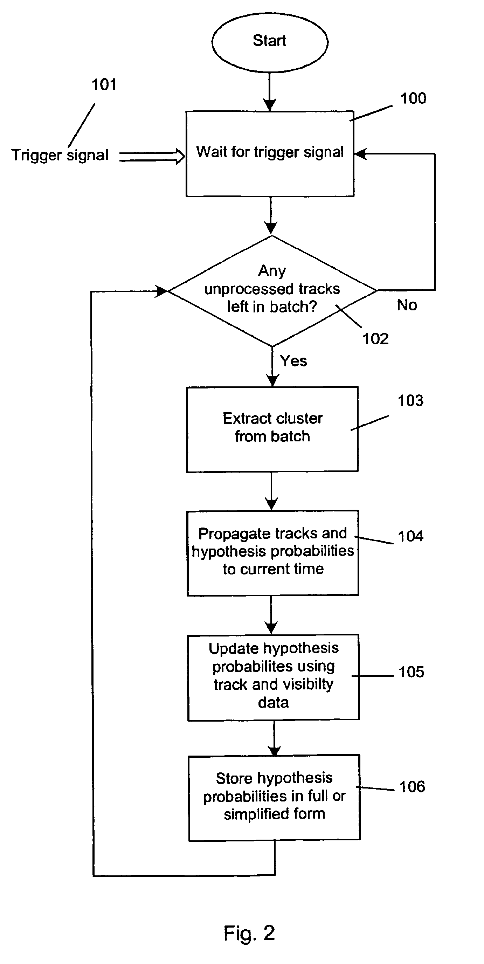

Now please refer to Fig. 2. Each correlation cycle starts with a trigger signal 101, typically after a certain time, although one could also consider various scenario dependent criteria. If there are no tracks to correlate 102, then the process enters a wait state, otherwise the next step is clustering, 103. The number of hypotheses can be extremely large. Therefore the set of tracks is divided into clusters that can be processed one at a time. The division is done in such a way that it is very unlikely that a local track in one cluster could be related to a local track in another cluster. The criteria for clustering should be based on track positions, and earlier target number assignments.

When a cluster has been extracted, all the tracks in the cluster are propagated to a common point of time 104. This includes the generation of new hypotheses and modifying the Bayesian probabilities from the previous cycle, as will be described below.

The following step is updating 105, where the various hypotheses are compared with new incoming data, i.e., tracks, to compute new probabilities. The procedure will be detailed below.

Finally there is the output step 106, where the updated probabilities are made available for the next cycle, and any target number reassignments are effectuated.

Thereafter the next cluster can be processed, and when the clusters are exhausted, the process waits for the next trigger.

**The structure of the hypotheses**

Each hypothesis stands for an assignment between the local tracks in the cluster and a system track number, which also represents the target. The local tracks are denoted $L_{si}$, where $s$ is the source (i.e. tracker) number, $s = 1..S$, where $S$ is the number of sources contributing to this cluster, and $i = 1..N_s$ enumerates the local track, $N_s$ being the number of local tracks from sensor $s$ in this cluster. The targets are $T_r$, $r = 1..G, G+1...G+K$, where $G$ is the number of targets already in this cluster, and $K$ is the maximum number of new targets (the new targets may include the possibility of false targets, i.e. the track does not represent any real object).

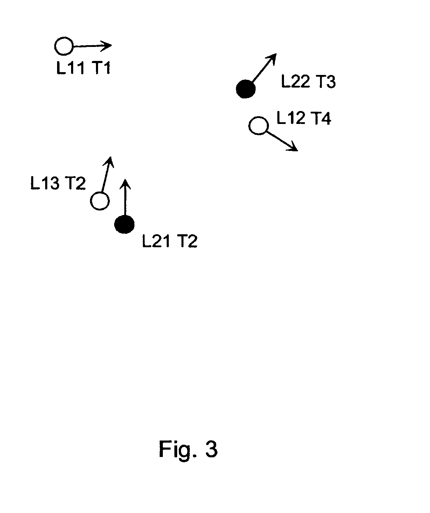

Fig 3 gives an example on how target numbers relate to track numbers. Source 1 provides local tracks L11, L12 and L13, and source 2 has tracks L21 and L22. The algorithm may have assigned target T1 to L11, T2 to L13 and L21, T3 to L22 and T4 to L12. Thus target 2 is tracked by both sources, while the other targets are tracked by a single source.

Various hypotheses can conveniently be represented by a table as illustrated in the following example. Assume that source 1 provides two tracks, source 2 has one track and source 3 has two tracks. Further assume that there are two targets from before, and that we allow at most one new target. The following table represents one out of many hypotheses.

| T1 | T2 | T3 |
|-----|-----|-----|
| L12 | L11 | |
| | L21 | |
| | L32 | L31 |

Here the second track from the first source represents target 1. Target 2 is tracked by all three sources. The first track of the third source does not go with any of the hitherto handled targets, but instead represents either a false track, or a new real target. One interpretation is that there are in fact three targets, but due to poor sensor resolution, no single sensor has yet detected all three. Another interpretation is that target 1 was tracked by both source 1 and source 3, but due to difficulties in sensor coverage or a very sudden strong maneuver, L12 and L31 have diverged, and are no longer compatible. It is up to the correlator, along with information from the trackers, to determine whether it is L12 or L31 that has been disconnected. Of course there are many other correlation possibilities; the table shows just one them.

It is easy to compute the number of hypotheses in the above situation. The local tracks from sensor 1 can be distributed in six ways among T1, T2 and T3, L21 can be put in three places, and L31 and L32 in six combinations. This makes a total of 108 hypotheses.

The number of hypotheses grows extremely rapidly with the number of sources, local tracks, and targets, which calls for schemes not to evaluate the probability of each hypothesis, but just a subset with the most feasible. We will return to that.

In forming hypotheses, note that if we allow $K > 1$, i.e. more than one new target, then some apparently different hypotheses are the same. If there were a T4 column in the table above, then putting L31 in T4 would not be a new hypothesis, it would be the same as having L31 with T3.

In some hypotheses a T column will be empty. According to such hypotheses, the target in question does not exist. Perhaps it was a false target, and the corresponding local track should be associated with another, true, target.

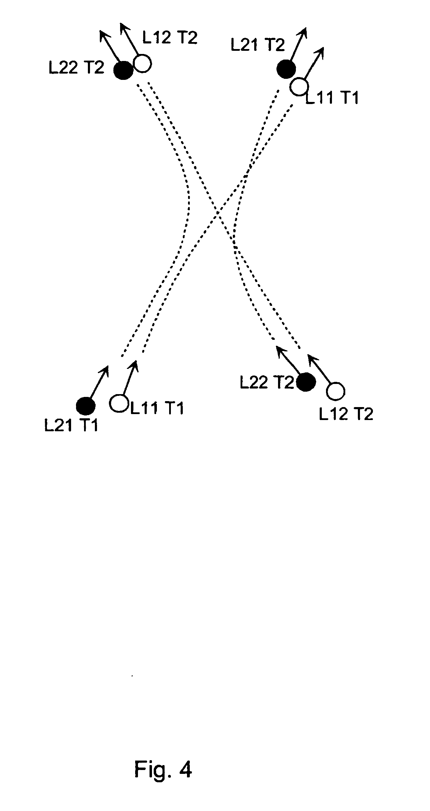

A particularly important situation, where hypothesis testing of this kind should be valuable, is in connection with two apparently crossing targets. The targets approach each other, come so close that sensors have difficulties resolving the situation, and then deviate, see Fig 4. According to source 1 the targets have crossed. According to source 2 the targets turned and did not cross. Regardless of which source is right, the local tracks that were associated before the ambiguity will become totally incompatible later. This calls for careful hypothesis testing. The hypotheses in question would be

| T1 | T2 | T3 |
|-----|-----|-----|
| L11 | L12 | |
| L21 | L22 | |

as before the ambiguous situation occurred (and now becoming very unlikely), and

| T1 | T2 | T3 |
|-----|-----|-----|
| L11 | L12 | |
| L22 | L21 | |

if source 1 was right, and

| T1 | T2 | T3 |
|-----|-----|-----|
| L12 | L11 | |
| L21 | L22 | |

if source 2 was right. With the help of track data, probabilities will be assigned to these hypotheses, basically so that the most reliable source will determine the outcome. Additional hypotheses include the case where both sensors have swapped the targets (possible but extremely unlikely), and cases that include one or more new targets.

**Key idea**

The key idea behind the present invention is that we consider a large number of hypotheses $H_n$, $n = 1,...,$ and where each hypothesis stands for a possible assignment EMBEDof targets (or target numbers) $T_p$ to local tracks (or track numbers) $L_{si}$, and that we estimate the probability for each hypothesis $p(H_n)$.

The two main steps in this process are:

i. A prediction step - computing the probabilities $p(H_n, t_k^-)$ at a later point of time $t_k$, taking into account that mistakes like track swapping may be made in the meantime

ii. An update step - computing the probabilities $p(H_n, t_k^+)$ from the predicted ones $p(H_n, t_k^-)$ using new evidence $z_k$, essentially stemming from updated track data.

In addition, there should be rules for how to initiate the loop (not part of this invention). We will also demonstrate simplified representations that require less computer resources.

**Prediction step**

In the prediction step, the probability mass tends to go from the most likely hypothesis to some other possible hypothesis, as there is always some risk that previous correct track-to-target assignments do not hold because of tracking errors. Expressing these probability changes is however very difficult, and in reality more or less heuristic schemes have to be used. These should express the fact that in difficult conditions - dense target situations, inadequate sensor coverage, etc. - there is a larger probability for tracking errors than in perfectly unambiguous cases.

**Updating step**

The updating step is normally (but not necessarily) based on Bayes rule, which gives

$$p\left(H_n, t_k^+\right) \propto p\left(z|H_n\right) p\left(H_n, t_k^-\right) \qquad (1)$$

where $p\left(H_n, t_k^-\right)$ is the probability of hypothesis $H_n$ after the prediction step, and $p(z|H_n)$ is the probability of obtaining the observed tracks and their observed positions assuming that $H_n$ is true. The constant of proportionality can be determined by making sure that the sum over the hypotheses is 1. $p\left(H_n, t_k^+\right)$ can then be used as the starting point for the next prediction leading to $p\left(H_n, t_{k+1}^-\right)$. However, in order for Bayes rule to be applicable in the form given above, it is important that the sequence of measurements is independent. One may thus not, in effect, feed in the same information $z$ over again, as that will produce erroneous probabilities. There are ways of handling dependent measurements in a Bayesian framework, but they are complicated and require accurate knowledge on the nature of dependencies. We simply avoid this problem by not updating too frequently, that is, tracks must have moved a long way compared to the positional uncertainties involved.

For simplicity we will here base the calculation on track positions only; extensions to include more data like velocities and other attributes are relatively straightforward.

Each hypothesis $H_n$ is defined by a set of $M_n$ targets, each corresponding to a target number, and an unknown true position $x_r$, $r = 1..M_n$. To each target corresponds $N_{nr} \geq 1$ tracks, each from a different sensor, having the positions $z_{jr}$, $j = 1...N_{nr}$. The positions are never exact, instead they are more appropriately described by probability densities $f_{jr}(x, x_r)$ around the true positions. The probability of finding the track within a small volume $dz$ around $z_{jr}$ is then $f_{jr}(z_{jr}, x_r) dz$. The probability of finding all the tracks corresponding to $x_r$ at their given positions is

$$\prod_{j=1}^{N_{nr}} f(z_{jr}, x_r)(dz)^{N_{nr}} \qquad (2)$$

The probability of finding all the tracks corresponding to all targets is then

$$\prod_{r=1}^{M_n} \prod_{j=1}^{N_{nr}} f(z_{jr}, x_r)(dz)^{\sum_{r=1}^{M_n} N_{nr}} \qquad (3)$$

The true positions $x_r$ are not known at all. They could be found in any volume element $dx_r$ with corresponding probability $\rho dx_r$ where $\rho$ is a typical target density (probably a tuning parameter). We have to integrate over all possible values, which finally leads to

$$p(z|H_n) \propto \rho^{M_n} \prod_{r=1}^{M_n} \int \prod_{j=1}^{N_{nr}} f(z_{jr}, x_r) dx_r \qquad (4)$$

where the factors containing $dz$ are left out as they are the same for all hypotheses. The number of $\rho$'s may however be different for different hypotheses.

The usage of the probability densities in this way is not quite correct as one neglects the dependence between the probability densities stemming from the same target (e.g. if the target makes a sudden maneuver, the error tends to have the same sign in all tracks representing this target). There are techniques in the literature to improve the correlation accuracy in this respect.

There is a complicating factor that should not be neglected, and that is visibility. Each sensor may have a limited capability to see a certain target. The sensors may have different coverage areas in space or electromagnetic spectrum, and thus it is perfectly possible that a target is not seen by some of the sensors. This should be taken into account when computing the probabilities for the hypotheses, otherwise the algorithm may force two independent tracks to represent the same target. The probability that a target is seen by a source can be expressed by a visibility factor $0 \leq K_{jr} \leq 1$. Likewise, the probability that a target is not seen by a source will be $1-K_{kr}$

As an example, for the hypothesis represented by the following table:

| T1 | T2 | T3 |
|-----|-----|-----|
| L12 | L11 | |
| | L21 | |
| | L32 | L31 |

we should produce visibility factors according to

| T1 | T2 | T3 |
|------|-----|-------|
| K11 | K12 | 1-K13 |
| 1-K21 | K22 | 1-K23 |
| 1-K31 | K32 | K33 |

Evaluating the probabilities for the hypothesis according to visibility then yields

$$p(z|H_n) \propto \prod_{r=1}^{M_n} \prod_{j=1}^{N_n} m(K_{jr}) \tag{5}$$

where

$$m(K_{jr}) = \begin{cases} K_{jr}, \text{source } j \text{ has target } r \\ 1-K_{jr}, \text{source } j \text{ does not have target } r \end{cases} \tag{6}$$

and $N_n$ is the number of sources involved.

One should however be cautious when using the visibility factors in (5), as they will not change rapidly. As (1) is meant to be used recursively, this would mean that the same information is incorrectly inserted over and over again. Unless visibility factors are 0 or 1 one should not enforce (5) too often. Similar reasoning holds if target classification or other attributes are incorporated in the application of Bayes' rule.

Incorporating the handling of attributes is very important for operational reasons, so that one does not for example correlate friend and foe tracks.

In practice one would usually assume Gaussian distributions for the probability densities. Then the uncertainty of a track is characterized by its covariance matrix $P_{jr}$ (either supplied with the tracks or estimated from some track quality number) and the probability density is given by

$$f_{jr}(z_{jr}, x_r) = \frac{1}{\sqrt{(2\pi)^s \det P_{jr}}} e^{-\frac{1}{2}(z_{jr}-x_r)^T P_{jr}^{-1}(z_{jr}-x_r)} \tag{7}$$

where s is the number of dimensions. Then the integration in (4) can be carried out explicitly, leading to a somewhat complicated but usable expression.

**Simplified enumeration of hypotheses**

As the number of hypothesis that can represent a cluster tends to be very large, we here describe a simplified embodiment of the invention. Here one handles each local track and each target number individually in the following way:

a. Each track $L_{si}$ is characterized by the most likely target number, $T_{si}$ and the probability $p_{si}$ that this is correct. The probability that any arbitrary target in the group is the correct one for $L_{si}$ can then most conveniently be described by the function

$$p(L_{si},T) = \begin{cases} p_{si}, & T = T_{si} \\ \dfrac{1 - p_{si}}{M - 1}, & T \neq T_{si} \end{cases}$$

where $M$ is the number of targets involved in the cluster (including possible new targets). Of course one could improve this, as all alternative target numbers do not have to be equally likely.
The probability for a hypothesis based on the track-target assignments will then be approximated by

$$p^L(H_n) = \prod_{s,i} p(L_{si}, T_n(L_{si}))$$

b. Each target $T_i$ is characterized by the probability $p_i^T$ that this target indeed exists and is trackable (maybe it has run out of sensor coverage, or ceased to exist, or never existed). Introduce the function

$$p^T(T_i) = \begin{cases} p_i^T, & T_i \; is \; used \; in \; hypothesis \\ 1 - p_i^T, & T_i \; is \; not \; used \; in \; hypothesis \end{cases}$$

c. Each hypothesis is classified by the set of targets involved. The selection of targets will then have the probability

$$p^T(H_n) = \prod_i p^T(T_i)$$

d. To compute the probability of a hypothesis $H_n$, one has to

    i. Note the selection of targets in the hypothesis
    ii. Compute the probability factors $p^L(H_n)$ for all hypotheses consistent with the selection of targets
    iii. Compute the approximate conditional probability

$$p^C(H_n) = \frac{p^L(H_n)}{\sum_m p^L(H_m)}$$

where the sum runs over all hypotheses consistent with the selection of targets of $H_n$
    iv. Compute the probability for $H_n$ from

$$p(H_n) = p^C(H_n)\, p^T(H_n)$$

An example:

Suppose we have one track $L_{11}$ from source 1, and one track $L_{21}$ from source 2. They have been assigned different target numbers, $T_1$ and $T_2$, so that

$$T_{11} = T_1,\, p_{11} = 0.8$$

$$T_{21} = T_2,\, p_{21} = 0.7$$

Moreover, we are rather sure that $T_1$ is a genuine target, while we are less sure about $T_2$:

$$p_1^T = 0.99$$

$$p_2^T = 0.6$$

We want to know if the tracks should have the same target number, and if so, which number, or if they should still be considered to represent different targets. The hypotheses are $H_1$ (no change):

| T1 | T2 |
|-----|-----|
| L11 |     |
|     | L21 |

$H_2$, both are $T_1$:

| T1 | T2 |
|-----|-----|
| L11 |     |
| L21 |     |

$H_3$, both are $T_2$:

| T1 | T2 |
|-----|-----|
|     | L11 |
|     | L21 |

and the unrealistic $H_4$, where both target numbers are replaced:

| T1 | T2 |
|-----|-----|
|     | L11 |
| L21 |     |

From the previously given equations we compute

$$p^T(H_1) = p^T(H_4) = 0.99 \cdot 0.6 = 0.594$$

$$p^T(H_2) = 0.99 \cdot 0.4 = 0.396$$

$$p^T(H_3) = 0.01 \cdot 0.6 = 0.006$$

Note 1: With respect to target selection, $H_1$ and $H_4$ are the same hypothesis, therefore the probabilities as written here add up to more than 1.

Note 2: As the selection "Neither $T_1$ nor $T_2$" is not possible here (as we have chosen not to include a $T_3$ column) the probabilities for the three selections add up to slightly less than one. Strictly the probabilities should be renormalized so that their sum is one, but since what we need is only to find the most probable hypothesis this is not needed.

Next, compute the probability factors $p^L(H_n)$

$$p^L(H_1) = 0.8 \cdot 0.7 = 0.5$$

$$p^L(H_2) = 0.8 \cdot 0.3 = 0.24$$

$$p^L(H_3) = 0.2 \cdot 0.7 = 0.14$$

$$p^L(H_4) = 0.2 \cdot 0.3 = 0.06$$

and the conditional probabilities

$$p^C(H_1) = \frac{0.56}{0.56 + 0.06} = 0.903$$

$$p^C(H_2) = \frac{0.24}{0.24} = 1$$

$$p^C(H_3) = \frac{0.14}{0.14} = 1$$

$$p^C(H_4) = \frac{0.06}{0.56 + 0.06} = 0.097$$

and finally the resulting probabilities

$$p(H_1) = 0.903 \cdot 0.594 = 0.536$$

$$p(H_1) = 0.396$$

$$p(H_3) = 0.006$$

$$p(H_4) = 0.097 \cdot 0.594 = 0.058$$

Thus the first hypothesis is the most likely.

We have now illustrated how to go from the simplified representation to the full (i.e. the track/target tables.) We must also be able to go back to the simplified representation. This is in principle very straightforward. First make sure that the hypotheses are properly normalized. Pick the target numbers that are assigned according to the most likely hypothesis, and then add the probabilities of all hypothesis assigning the target number in question to the track. Likewise, add the probabilities of all hypotheses where the first target number is included, etc.

In the example given above, the normalized probabilities are

$$p(H_1) = 0.538$$

$$p(H_1) = 0.398$$

$$p(H_3) = 0.006$$

$$p(H_4) = 0.058$$

The first hypothesis is the most likely one, thus

$$T_{11} = T_1$$

$$T_{21} = T_2$$

as before, and

$$p_{11} = 0.511 + 0.377 = 0.936$$

$$p_{21} = 0.511 + 0.057 = 0.544$$

$$p_1^T = 0.511 + 0.377 + 0.055 = 0.994$$

$$p_2^T = 0.511 + 0.057 + 0.055 = 0.602$$

We did not get back the original values, but that should not have been expected. The large number of probabilities in the complete set have been represented as a smaller number of probabilities; this is a process that cannot be reversed.

A more sophisticated version of the simplified representation could consist in storing more than one target number and its probability in each track. Although this could be very helpful in allowing secondary hypotheses to grow, it adds significantly to the complexity of the algorithm.

**Simplifed computation**

The number of hypotheses to be evaluated can be extremely large even for small clusters. For example, with three track sources, each with three tracks, and with five possible target numbers, the number of hypotheses is 216000. It would be impractical to compute the updated probabilities for all hypotheses. A suggestion for a simplified scheme, to be invoked when the cluster is large, is not to compute the probabilities for all hypotheses, but only those that seem to be realistic. One or both of the following methods can be employed:

a. Start with the hypothesis that was deemed most probable in the previous cycle. Then generate new hypotheses by applying a set of simple operations, such as changing just one target number of a single track, or performing just one swapping of target numbers for two tracks. If a hypothesis generated this way is more probable than the starting hypothesis, then repeat the process from the new best hypothesis.
b. Start with the hypothesis that a naïve correlation algorithm would yield, such as minimizing the sum of the squares of the statistical distances between tracks. Proceed as in a.

**Distributed correlation**

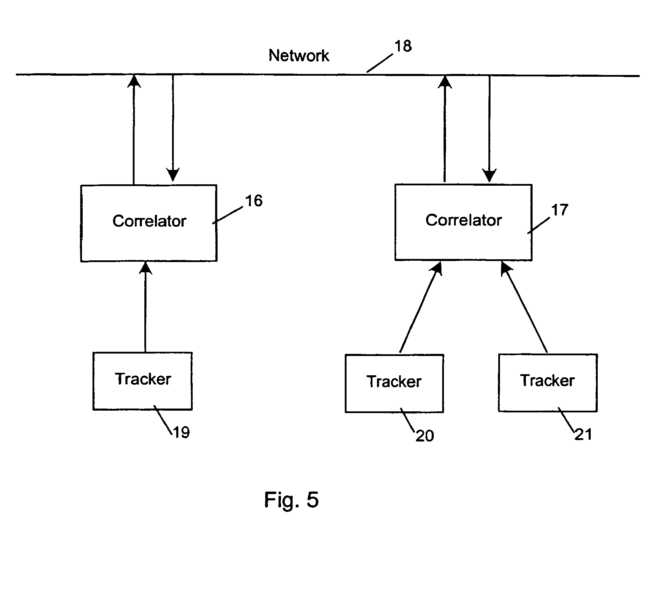

An application where this invention may be very useful is distributed correlation, please refer to Figure 5. In this case has several correlators 16, 17 running at different sites, each correlator being connected to one or more trackers 19, 20, 21. The correlators are communicating over some kind of network 18, with the aim of forming a common situation picture. In particular the global track numbers (i.e. target numbers) must be identical at the different sites for one and the same target. In the simplified enumeration of hypotheses of the previous section, the most likely target number for each track may conveniently serve as the global track number. In case there is a conflict, i.e. two sites disagree on the global track number, ideally both correlators should arrive at the same conclusion as to which track should change the number. Because of differences in timing, limitations in communication, and differences in local track sets, additional rules may have to be included concerning e.g. track quality or track age, to control which site should do the renumbering.

**Claims**

1. A method relating to target tracking for correlating and numbering target tracks (14) from track data of multiple track sources (11) Into a single set of tracks, system tracks (15) aiming to form a situation picture, where each target is represented by a target number as an unique identification, wherein
each system track is based on one or a plurality of the target tracks (14) relating to the same target represented by the target number, **characterized by** the steps of
generating a number of track-to-target correlation hypotheses, where each hypothesis stands for a possible assignment of the target numbers to the target tracks (14), and
executing a probabilistic evaluation of the correlation hypotheses to form track-to-target correlation hypotheses probabilities, the probabilistic evaluation comprising repeatedly executing the following steps, namely

i) propagating existing track-to-target correlation hypothesis probabilities to next time of evaluation, and
ii) computing and evaluating new track-to-target correlation hypotheses probabilities based on the propagated probabilities, and on observed track characteristics such as position, velocities, attributes and their uncertainties, as well as sensor coverage data.

2. A method for correlating target tracks from multiple track sources according to claim 1, **characterized in that** the evaluation of new assignment hypotheses probabilities is carried out according to Bayes' rule.

3. A method for distributed correlation of target tracks from multiple track sources according to claim 3, **characterized in that** at least two instances of a correlator are run at different sites, and that tracks correlated and assigned a target number at one site are used as input for correlation and target number assignment at the others.

4. A method for correlating target tracks from multiple track sources according to any one of the preceding claims 1-4, **characterized in that** the computation of probabilities is limited to hypotheses obtained by recursively applying changing of or swapping of target numbers of either the originally most likely hypothesis, or the most likely hypothesis obtained so far by this method.

5. A method for correlating target tracks from multiple track sources according to any ane of the preceding claims 1-4, **characterized in that** the computation of probabilities is limited to hypotheses obtained by recursively applying changing of or swapping of target numbers of either a hypothesis obtained from a correlation algorithm minimizing the sum of the squares of the statistical distances between tracks, or the most likely hypothesis obtained so far by this method.

**Patentansprüche**

1. Verfahren betreffend Zielverfolgung für die Korrelation und Nummerierung von Zielspuren (14) aus Spurdaten mehrerer Spurquellen (11) zu einem einzigen Satz von Spuren, wobei Systemspuren (15) anstreben, ein Lagebild zu bilden, in welchem jedes Ziel durch eine Zielnummer als einzigartige Identifikation repräsentiert ist, wobei jede Systemspur auf einer oder mehreren der Zielspuren (14), die auf dasselbe, durch die Zielnummer repräsentierte Ziel bezogen sind, basiert, **gekennzeichnet durch** die folgenden Schritte:

   Erzeugung einer Anzahl von Spur-zu-Ziel-Korrelationshypothesen, wobei jede Hypothese für eine mögliche Zuordnung der Zielnummern zu den Zielspuren (14) steht, und
   Durchführung einer probalistischen Auswertung der Korrelationshypothesen zur Bildung von Wahrscheinlichkeiten von Spur-zu-Ziel-Korrelationshypothesen, wobei die probalistische Auswertung eine wiederholte Durchführung der folgenden Schritte umfasst, und zwar

   i) Propagierung von Wahrscheinlichkeiten vorhandener Spur-zu-Ziel-Korrelationshypothesen bis zum nächsten Mal der Auswertung, und
   ii) Errechnen und Auswertung von Wahrscheinlichkeiten neuer Spur-zu-Ziel-Korrelationshypothesen basierend auf den propagierten Wahrscheinlichkeiten und auf beobachteten Spurmerkmalen, wie beispielsweise Position, Geschwindigkeiten, Attributen und ihren Unsicherheiten sowie Sensorabdeckungsdaten.

2. Verfahren zur Korrelation von Zielspuren aus mehreren Spurquellen nach Anspruch 1, **dadurch gekennzeichnet, dass** die Auswertung von Wahrscheinlichkeiten neuer Zuordnungshypothesen nach der Bayes-Regel durchgeführt wird.

3. Verfahren zur distribuierten Korrelation von Zielspuren aus mehreren Spurquellen nach Anspruch 2, **dadurch gekennzeichnet, dass** mindestens zwei Fälle eines Korrelators an verschiedenen Stellen abgewickelt werden, und dass Spuren, die an einer Stelle korreliert und einer Zielnummer zugeordnet werden, als Eingabe für Korrelation und Zielnummer-Zuordnung an den anderen Stellen verwendet werden.

4. Verfahren zur Korrelation von Zielspuren aus mehreren Spurquellen nach einem der vorgehenden Ansprüche 1 bis 3, **dadurch gekennzeichnet, dass** das Errechnen von Wahrscheinlichkeiten auf Hypothesen begrenzt ist, welche durch die rekursive Anwendung eines Veränderns oder eines Austauschens von Zielnummern von entweder der ursprünglich wahrscheinlichsten Hypothese oder der durch dieses Verfahren bislang erhaltenen wahrscheinlichsten Hypothese erhalten sind.

5. Verfahren zur Korrelation von Zielspuren aus mehreren Spurquellen nach einem der vorgehenden Ansprüche 1 bis 4, **dadurch gekennzeichnet, dass** das Errechnen von Wahrscheinlichkeiten auf Hypothesen begrenzt ist, welche durch die rekursive Anwendung eines Veränderns oder eines Austauschens von Zielnummern von entweder einer von einem Korrelationsalgorithmus erhaltenen Hypothese, welcher die Summe der Quadratzahlen der statistischen Abstände zwischen Spuren minimiert, oder der durch dieses Verfahren bislang erhaltenen wahrscheinlichsten Hypothese erhalten sind.

**Revendications**

1. Procédé relatif au ciblage de pistes pour corréler et numéroter les pistes de cibles (14) à partir de données de pistes de plusieurs sources de pistes (11) dans un seul ensemble de pistes, des pistes de système (15) visant à former une image de situation dans laquelle chaque cible est représentée par un numéro de cible en tant qu'une identification unique,
   chaque piste de système étant basée sur une ou plusieurs pistes de cibles (14) liées à la même cible représentée par le numéro de cible,
   **caractérisé par** les étapes consistant à

générer un nombre d'hypothèses de corrélation piste-à-cible, chaque hypothèse représentant une affectation possible des numéros de cible aux pistes de cibles (14), et

exécuter une évaluation probabiliste d'hypothèses de corrélation pour former des probabilités d'hypothèses de corrélation piste-à-cible comprenant les étapes suivantes exécutées de manière répétée, à savoir

    i. la propagation de probabilités d'hypothèses de corrélation piste-à-cible existantes à la prochaine fois d'évaluation, et

    ii. le calcul et l'évaluation de nouvelles probabilités d'hypothèses de corrélation piste-à-cible basées sur les probabilités propagées, et sur des caractéristiques de piste observées telles que la position, les vitesses, les attributs et leurs incertitudes ainsi que les données de couverture du capteur.

2. Procédé pour la corrélation de pistes de cibles à partir de plusieurs sources de piste selon la revendication 1, **caractérisé en ce que** l'évaluation de nouvelles probabilités d'hypothèses d'affectation est effectuée selon la règle de Bayes.

3. Procédé pour la corrélation distribuée de pistes de cibles à partir de plusieurs sources de piste selon la revendication 2, **caractérisé en ce qu'**au moins deux instances d'un corrélateur sont exécutées à des sites différents, et que des pistes corrélées et affectées d'un numéro de cible à un seul site sont utilisées en tant qu'entrée pour la corrélation et l'affectation d'un numéro de cible aux autres.

4. Procédé pour la corrélation de pistes de cibles à partir de plusieurs sources de piste selon l'une quelconque des revendications 1 à 3, **caractérisé en ce que** le calcul des probabilités est limité aux hypothèses obtenues par l'application récursive de modifications ou d'échange de numéros de cible soit de l'hypothèse originairement la plus probable, soit l'hypothèse la plus probable obtenue jusqu'ici par ce procédé.

5. Procédé pour la corrélation de pistes de cibles à partir de plusieurs sources de piste selon l'une quelconque des revendications 1 à 4, **caractérisé en ce que** le calcul des probabilités est limité aux hypothèses obtenues par l'application récursive de modifications ou d'échange de numéros de cible soit d'une hypothèse obtenue à partir d'un algorithme de corrélation minimisant la somme des carrés des distances statistiques entre les pistes, soit de l'hypothèse la plus probable obtenue jusqu'ici par ce procédé.

Fig. 1

Start

101

Trigger signal ⟹ | Wait for trigger signal | 100

Any unprocessed tracks left in batch? — No

102

Yes

Extract cluster from batch — 103

Propagate tracks and hypothesis probabilities to current time — 104

Update hypothesis probabilites using track and visibilty data — 105

Store hypothesis probabilities in full or simplified form — 106

Fig. 2

L11 T1

L22 T3

L12 T4

L13 T2

L21 T2

Fig. 3

Fig. 4

Network                    18

Correlator        16          Correlator        17

Tracker                    Tracker        Tracker
    19                        20            21

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5414643 A

### Non-patent literature cited in the description

- Design and Analysis of Modern Tracking Systems. Artech House, 1999
- **OLIVER DRUMMOND.** A Hybrid Sensor Fusion Algorithm Architecture and Tracklets. *SPIE - The International Society for Optical Engineering,* 1997, vol. 3163, 485-502
- **D J PERCIVAL ; K A B WHITE.** *proceedings of SPIE,* 1998, vol. 3373, 440-451